(19)

**Europäisches Patentamt**
**European Patent Office**
**Office européen des brevets**

(11) **EP 4 664 356 A1**

(12) **EUROPEAN PATENT APPLICATION**

(43) Date of publication:
**17.12.2025 Bulletin 2025/51**

(21) Application number: **25182554.3**

(22) Date of filing: **13.06.2025**

(51) International Patent Classification (IPC):
$G06N\ 3/042^{(2023.01)}$ $\quad$ $G06N\ 3/045^{(2023.01)}$
$G06N\ 20/20^{(2019.01)}$ $\quad$ $G05B\ 19/042^{(2006.01)}$
$G05B\ 19/418^{(2006.01)}$ $\quad$ $G05B\ 23/02^{(2006.01)}$
$F27B\ 7/00^{(2006.01)}$ $\quad$ $G05B\ 13/02^{(2006.01)}$

(52) Cooperative Patent Classification (CPC):
G06N 3/045; G05B 17/02; G05B 19/0425;
G05B 19/41885; G05B 23/0297; G06N 3/04;
G06N 3/042; G06N 3/0455; G06N 3/048;
G06N 3/08; G06N 3/084; G06N 3/09; G06N 20/20;
F27B 7/00; G05B 13/027; $\qquad$ (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.06.2024 IN 202421046159**

(71) Applicant: **Tata Consultancy Services Limited
Maharashtra (IN)**

(72) Inventors:
• PATEL, Janak Maheshbhai
  411057 Pune, Maharashtra (IN)
• JADHAV, Vishal Sudam
  411028 Pune, Maharashtra (IN)
• KARANDE, Shirish Subhash
  411006 Pune, Maharashtra (IN)
• RUNKANA, Venkataramana
  411028 Pune, Maharashtra (IN)

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR DOMAIN AWARE DATA DRIVEN (DADD) MODELING OF AN INDUSTRIAL ENTITY**

(57) This disclosure relates generally to a method and system for a domain aware data driven model (DADD) for optimizing complex operations of an industrial entity expressed by process governing equations (PGEs). State-of-the-art methods face convergence challenges when applied to complex systems of industrial entity. Moreover, process descriptors available for these complex systems often tend to be sparse. The disclosed method involves domain aware neural network modeling of the complex industrial entities. The method involves obtaining process governing equations (PGEs), spatiotemporal domain co-ordinates and sparse measurements of the industrial entity. The domain aware model is generated by extracting sub-process governing equation component from the plurality of PGEs, followed by designing a grouped neural network architecture (GNNA) having individual neural network subset parameter of each sub-process governing equation component. The neural network architecture is sequentially trained and fine-tuned to finally predict process descriptors for the industrial entity.

FIG. 2

**(Cont. next page)**

(52) Cooperative Patent Classification (CPC): (Cont.)
G06F 2212/175

## EP 4 664 356 A1

**Description**

CROSS-REFERENCE TO RELATED APPLICATIONS AND PRIORITY

The present application claims priority from Indian patent application no. 202421046159, filed on June 14, 2024.

TECHNICAL FIELD

The disclosure herein generally relates to domain aware modeling of an industrial entity, and, more particularly, a method and system for a neural network assisted domain aware modeling of an industrial entity.

BACKGROUND

Obtaining measurements in an industrial entity that involves multiphysics process is a complex task, and when available, they tend to be sparse. Modeling industrial systems is crucial for accurately representing their behavior. Such models play a key role in optimization, control, and predictive maintenance of industrial entities. Various types of physics and data-driven models have been employed in current technology, each with its own limitations. Traditionally, these models are either physics-based or data-driven. However, physics-based models face challenges when model parameters change, or model properties are unavailable. On the other hand, while data-driven models offer flexibility, they may lack generalizability and soft sensing capabilities. Domain aware data driven (DADD) modelling approach help in combining the pros of both physics and data driven approaches. These models, however, are difficult to train as a lot of fine tuning and hyperparameter search needs to be done to identify the suitable optimal model for the engineering applications. DADD models comprise of different architectures, like physics informed neural operators (PINOs), physics informed neural networks (PINNs), hyper physics informed neural operators (HPINOs), hypernetwork based physics informed neural networks (HPINNs), physics informed symbolic networks (PISNs) etc. The PINNs integrate both physical principles and data-driven insights into the model. However, PINNs often face convergence challenges when applied to complex systems of industrial entity with multiphysics process. Several training strategies have been proposed to improve PINN convergence; however, they are not suitable for achieving rapid convergence in industrial entity with multiphysics processes. In recent years, Physics-Informed Neural Networks (PINNs) have been introduced which leverage the advantages of both physics-based and data-driven models by incorporating governing principles and data into the loss function. While PINNs demonstrate potential in addressing simple systems and academic problems, they frequently encounter convergence challenges when utilized in real-world industrial applications due to the inherent complexity of industrial entities.

One such example of a complex industrial entity is a rotary kiln. The rotary kiln is a cylindrical vessel rotating along its axis and is a common equipment in several process industries such as chemicals, pulp and paper, cement, minerals and metals, and food processing. One of the main challenges faced in the operation of these kilns is the formation of rings inside the kiln due to deposition of materials at certain locations. It happens due to various physio-chemical phenomena that take place inside the kiln. Due to this, the kiln production rate decreases, and the quality of product deteriorates because the effectiveness of heat transfer between the materials diminishes. In industrial systems like a rotary kiln, obtaining measurements is a complex task, and when available, they often tend to be sparse. However, the health or condition of the kiln changes with time due to material degradation and maintenance activities. Moreover, the kiln operating conditions also change significantly over time. As a result, even though theoretical models exist for these processes, predictions from these models are not accurate, requiring exploration and discovery of modified model to enhance their reliability.

SUMMARY

Embodiments of the present disclosure present technological improvements as solutions to one or more of the above-mentioned technical problems recognized by the inventors in conventional systems. For example, in one embodiment, a method of training a domain aware data driven (DADD) model of an industrial entity for predicting one or more process descriptors is provided. The method includes receiving a plurality of process governing equations (PGEs), a plurality of process descriptors and a plurality of spatiotemporal domain coordinates of an industrial entity. The PGEs are stored in a database that further stores properties and parameters relevant to the PGEs. The equipment centric repositories stores design and material specifics of the industrial entity and laboratory analysis data. The method further includes receiving real-time sparse measurements of the plurality of process descriptors of the industrial entity. A separate repository stores real-time sparse measurements of the industrial entity and is made available to the model to make relevant predictions. The method further includes extracting a plurality of sub-process governing equation components from the PGEs. The plurality of sub-process governing equation components are extracted and identified from the PGEs.

Also, while extracting individual sub-process governing equation components, missing components are identified and accordingly, neural network architecture is modified by assigning an extra neural network sub-set to predict the missing components. The method further includes preparing a grouped neural network architecture (GNNA) comprising a plurality of neural network sub-set parameters, wherein each sub-process governing equation component is reinforced by each neural network sub-set parameter of the plurality of neural network sub-set parameters, and wherein each of the plurality of neural network sub-set parameters predicts the plurality of process descriptors associated with each of the plurality of sub-process governing equation components. Based on the individual sub-process governing equation components identified as well as assessing unknown/missing components, the individual neural network sub-set parameters are assigned within the common neural network forming the grouped DAAD architecture. The method further includes generating a sequential training scheme for the GNNA, wherein an order of training each of the plurality of sub-process governing equation components is specified based on a plurality of pre-defined criteria. The set of pre-defined criteria controlling the sequential training include domain knowledge, inter-relationship of sub-process governing equation components with each other, availability of sparse measurements of the process descriptors, and missing process parameters. The method further includes training the GNNA based on the sequential training scheme wherein the neural network sub-set parameter associated with each of the plurality of sub-process governing equation components is selectively trained to predict the associated descriptor. Each neural network sub-set parameter corresponding to the predicted process descriptor is selectively trained by keeping the remaining GNNA parameters unchanged followed by applying a plurality of loss function. The first loss function comprises an error between real time sparse measurements of the plurality of process descriptor and the predicted process descriptor, and the second loss function is a residual of the sub-process governing equations. Next, optimization is carried out to minimize both losses associated with the multiphysics components of the PGEs. The method further includes fine tuning the GNNA wherein a plurality of parameters associated with each of the plurality of neural network sub-set parameters of the DADD is trained.

In another aspect, a system for training DADD model of an industrial entity for predicting one or more process descriptors is provided. The system includes at least one memory storing programmed instructions; one or more Input /Output (I/O) interfaces; and one or more hardware processors, a domain aware model, operatively coupled to a corresponding at least one memory, wherein the system is configured to receive a plurality of process governing equations (PGEs), a plurality of process descriptors and a plurality of spatiotemporal domain coordinates of an industrial entity. The PGEs are stored in a database that further stores properties and parameters relevant to the PGEs. The equipment centric repositories stores design and material specifics of the industrial entity and laboratory analysis data. Further, the system is configured to receive real-time sparse measurements of the plurality of process descriptors of the industrial entity. A separate repository stores real-time sparse measurements of the industrial entity and is made available to the model to make relevant predictions. Further, the system is configured to extract a plurality of sub-process governing equation components from the PGEs. The plurality of sub-process governing equation components are extracted and identified from the PGEs. Also, while extracting individual sub-process governing equation components, missing components are identified and accordingly, neural network architecture is modified by assigning an extra neural network sub-set parameter to predict the missing components. The system is configured to prepare a grouped neural network architecture (GNNA) comprising a plurality of neural network sub-set parameters, wherein each sub-process governing equation component is reinforced by each neural network sub-set parameter of the plurality of neural network sub-set parameters, and wherein each of the plurality of neural network sub-set parameters predicts the plurality of process descriptors associated with each of the plurality of sub-process governing equation components. Based on the individual physics components identified as well as assessing unknown/missing components, the individual neural network sub-set parameters are assigned within the common neural network forming the grouped DAAD architecture. The system is configured to generate a sequential training scheme for the GNNA, wherein an order of training each of the plurality of sub-process governing equation components is specified based on a plurality of pre-defined criteria. The set of pre-defined criteria controlling the sequential training include domain knowledge, inter-relationship of sub-process governing equation components with each other, availability of sparse measurements of the process descriptors, and missing process parameters. The system is configured to train the GNNA based on the sequential training scheme wherein the neural network sub-set parameter associated with each of the plurality of sub-process governing equation components is selectively trained to predict the associated descriptor. Each neural network sub-set parameter corresponding to the predicted process descriptor is selectively trained by keeping the remaining GNNA unchanged followed by applying a plurality of loss function. The first loss function comprises an error between real time sparse measurements of the plurality of process descriptor and the predicted process descriptor, and the second loss function is a residual of the sub-process governing equations. Next, optimization is carried out to minimize both losses associated with the sub-process governing equation components of the PGEs. The system is configured to fine tune the GNNA wherein a plurality of parameters associated with each of the plurality of neural network sub-set parameters of the DADD is trained.

In yet another aspect, a computer program product including a non-transitory computer-readable medium embodied therein a computer program for training DADD model of an industrial entity for predicting one or more process descriptors is provided. The computer readable program, when executed on a computing device, causes the computing device to receive, via one or more hardware processors, a plurality of PGEs, a plurality of process descriptors and a plurality of spatiotemporal domain co-ordinates of an industrial entity. The PGEs are stored in a database that further stores properties and parameters relevant to the PGEs. The equipment centric repositories stores design and material specifics of the industrial entity and laboratory analysis data. The computer readable program, when executed on a computing device, causes the computing device to receive, via one or more hardware processors, real time sparse measurements of the plurality of process descriptors of the industrial entity. A separate repository stores real-time sparse measurements of the industrial entity and is made available to the model to make relevant predictions. The computer readable program, when executed on a computing device, causes the computing device to extract, via one or more hardware processors, a plurality of sub-process governing equation component from the plurality of PGEs. The plurality of sub-process governing equation components are extracted and identified from the PGEs. Extracting individual physics components identify precisely as to which variable is deviating from the expected parameters. Also, while extracting individual sub-process governing equation components, missing components are identified and accordingly, neural network architecture is modified by assigning an extra neural network sub-set parameter to predict the missing components. The computer readable program, when executed on a computing device, causes the computing device to prepare, via one or more hardware processors, a GNNA comprising a plurality of neural network sub-set parameter wherein each sub-process governing equation component is reinforced by each neural network sub-set, and wherein each neural network sub-set parameter predicts the plurality of process descriptors corresponding to each sub-process governing equation component. Based on the individual sub-process governing equation components identified as well as assessing unknown/missing components, the individual neural network sub-set parameters are assigned within the common neural network forming the grouped DAAD architecture. The computer readable program, when executed on a computing device, causes the computing device to generate, via one or more hardware processors, a sequential training scheme for the GNNA wherein, order of training each sub-process governing equation component is specified based on a plurality of pre-defined criteria. The set of pre-defined criteria controlling the sequential training include domain knowledge, inter-relationship of sub-process governing equation components with each other, availability of sparse measurements of the process descriptors, and missing process parameters. The computer readable program, when executed on a computing device, causes the computing device to train, via one or more hardware processors, the GNNA based on the sequential training scheme wherein each neural network sub-set parameter of the sub-process governing equation component is selectively trained to predict corresponding process descriptor. Each neural network sub-set parameter corresponding to the predicted process descriptor is selectively trained by keeping the remaining GNNA unchanged followed by applying a plurality of loss function. The first loss function comprises an error between real time sparse measurements of the plurality of process descriptor and the predicted process descriptor, and the second loss function is a residual of the sub-process governing equations. Next, optimization is carried out to minimize both losses associated with the multiphysics components of the PGEs. The computer readable program, when executed on a computing device, causes the computing device to fine tune, via one or more hardware processors, the GNNA wherein a plurality of parameters associated with each neural network sub-set parameters of the DADD model architecture is trained.

It is to be understood that both the foregoing general description and the following detailed description are exemplary and explanatory only and are not restrictive of the invention, as claimed.

BRIEF DESCRIPTION OF DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system 100 for domain aware data driven (DADD) modeling of industrial entity, according to some embodiments of the present disclosure.
FIG. 2 illustrates an functional components of DADD model for an industrial entity, according to some embodiments of the present disclosure.
FIG. 3 is an illustrative flow diagram involving components for predicting process descriptors vital for operational efficiency of the industrial entity using the DADD model, according to some embodiments of the present disclosure.
FIGS. 4A-4B are flow diagrams of an illustrative method 400 for domain aware modeling of industrial entity, according to some embodiments of the present disclosure.
FIG. 5 is a flow diagram of sequential training of neural network architecture, according to some of the embodiments of the present invention.
FIG. 6 illustrates a rotary kiln structure depicting entry and exit cross-sections, according to some embodiments of the present disclosure.
FIG. 7 illustrates grouped neural network architecture (GNNA) for a rotary kiln, according to some embodiments of the present disclosure.
FIG. 8 illustrates a GNNA training scheme for rotary kiln model, according to some embodiments of the present disclosure.

DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. With the continuous improvement of the industrialization level, the design and manufacturing technologies of the equipment have also advanced swiftly, making the equipment's safety and reliability increasingly significant. Equipment in operation is constantly exposed to various environmental forces (such as cutting forces, friction, ambient temperature, and vibration), and is susceptible to wear and tear, rusting of parts, deterioration of components, and other problems, leading to frequent abnormalities in the equipment, resulting in a gradual decline in its efficiency and life, and even catastrophic failures. To address these issues, condition monitoring of equipment has attracted tremendous research attention to ensure the safety and reliability of production.

Physics-based models and data-driven models follow different approach but when both the models integrate, they can monitor critical complex industrial entities and estimate unusual parameters well ahead in time. On one hand, physics-based models are the primary tool in manufacturing to estimate physical variables and analyze their relationships and address low-uncertainty problems. On the other hand, data-driven models, such as machine learning, can address high-uncertainty and low-complexity problems by building the correlation among physical phenomena and predict behaviors of manufacturing systems. Three widely applied data-driven modeling techniques are deep learning, machine learning, and transfer learning. Machine learning techniques extract features from monitoring signals to represent critical information of equipment, and then construct the relationship between handcrafted features and fault types. Due to dynamic conditions, ageing and various maintenance activities for industrial entity, process parameters changes over period of time. However, changes in the parameters of the physics model can lead to decreased accuracy in predictions from the PINN model, necessitating the need to identify modified parameters to improve prediction capability. The objective of the present disclosure is to employ DADD to tackle the aforementioned challenge for updating models of industrial entity. In the present disclosure, a sequential training method is proposed to overcome these challenges. The approach towards developing the DADD for the process governing equations (PGEs) governed industrial entities involves identifying and determining the number of sub-process governing equation components from the PGEs. Generally, obtaining measurements from such complex systems is a difficult task, and when available, they tend to be sparse. The present invention utilizes such sparse measurements along with the sub-process governing equation components of the industrial system for the domain aware model development.

As used herein the term "industrial entity" refers to an industrial component, sub-component, a group of components whose functioning is demonstrated by the PGEs.

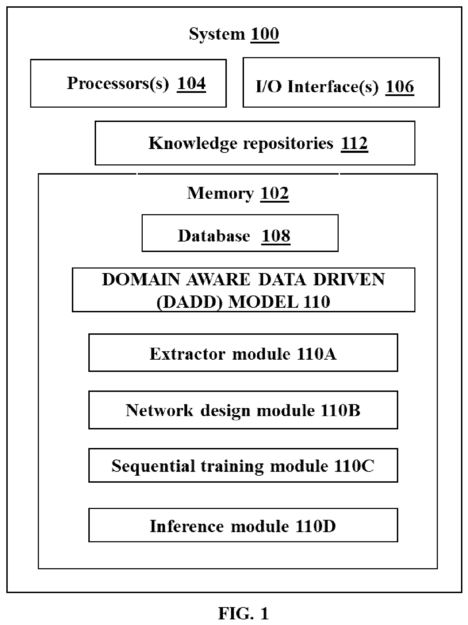

Referring now to the drawings, and more particularly to FIG. 1 through FIG. 8, where similar reference characters denote corresponding features consistently throughout the figures, there are shown preferred embodiments, and these embodiments are described in the context of the following exemplary system and/or method.

FIG. 1 illustrates an exemplary block diagram of a system 100 for domain aware data driven (DADD) modeling of industrial entity, according to some embodiments of the present disclosure.

In an embodiment, the system 100 includes a processor(s) 104, communication interface device(s) 106, alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100. Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like. The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to number of external devices or to another server or devices. The memory 102 may include any computer-readable medium known in the art including, for example, volatile memory, such as static random-access memory (SRAM) and dynamic random-access memory (DRAM), and/or nonvolatile memory, such as read only memory (ROM), erasable programmable ROM, flash memories, hard disks, optical disks, and magnetic tapes. In an embodiment, the memory 102 includes a DADD model 110. The domain aware model 100 further comprises of a plurality of modules that includes programs or coded instructions that supplement applications or functions performed by the system 100 for executing different steps involved in the prediction of process parameters the industrial entity, being performed by the system 100. The modules, amongst other things, can include routines, programs, objects, components, and data structures, which perform particular tasks or implement particular abstract data types. The modules may also be used as signal processor(s), node machine(s), logic circuitries, and/or any other device or component that manipulates signals based on operational instructions. Further, the modules can be used by hardware, by computer-readable instructions executed by the one or more hardware processors 104, or by a combination thereof. The modules may include computer-readable instructions that supplement applications or functions performed by the system 100. The DADD model 110 specifically comprises of an extractor module 110A, a network design module 110B, a sequential training module 110C, and an inference module 110D. The extractor module 110A extracts and determines the number of physics components from a process governing equation involved in governing the specific operation of the industrial entity. The network design module 110B handles design of network architecture comprising a plurality of neural network sub-set parameters wherein each neural network sub-set parameter is designed for each sub-process governing equation component of the process governing equation. The sequential training module 110C trains the designed neural network architecture. Initially, the sequential training module 110C generates sequential training schemes based on domain knowledge and the interrelationship of multiple sub-process governing equation components.

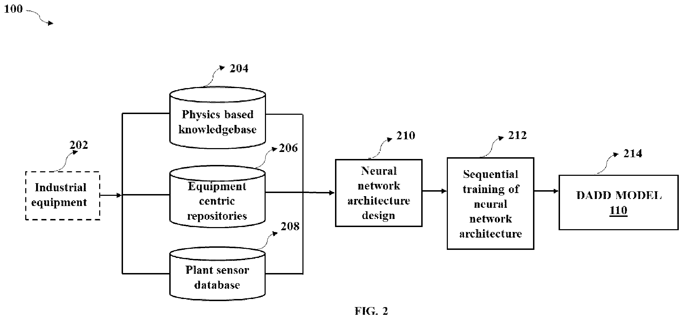

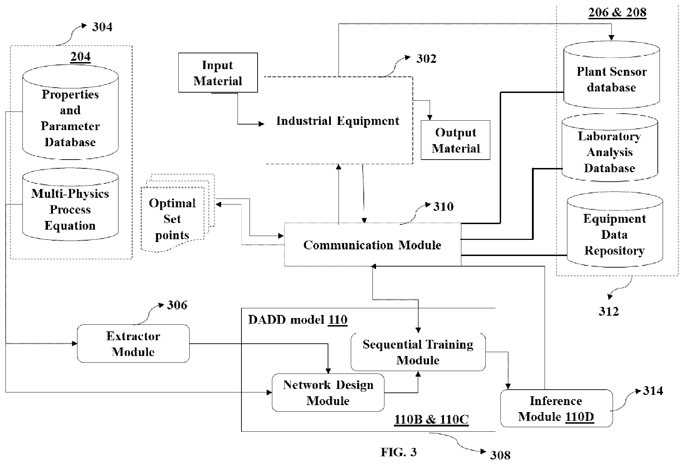

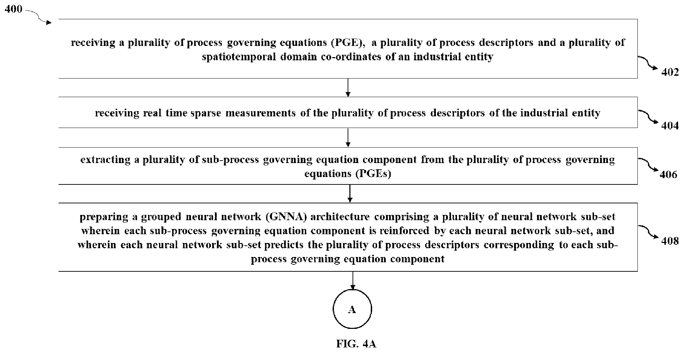

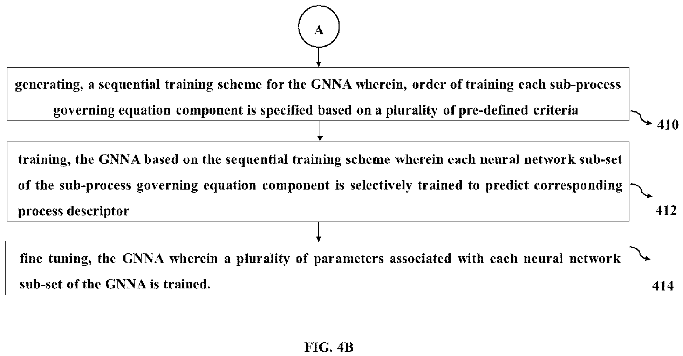

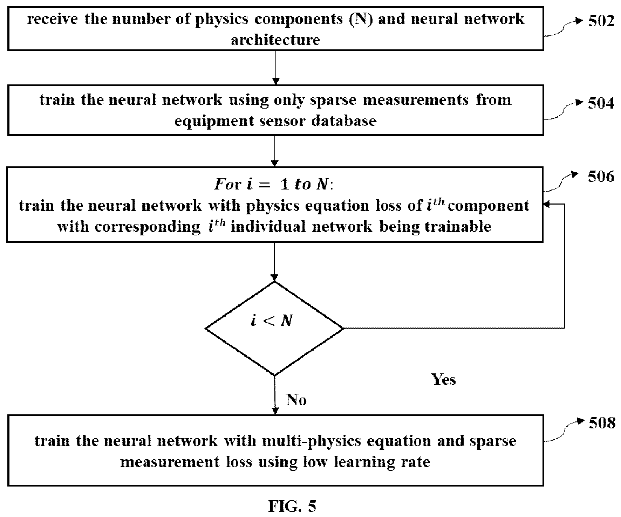

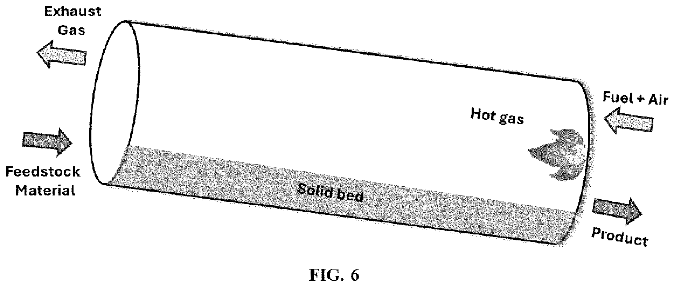

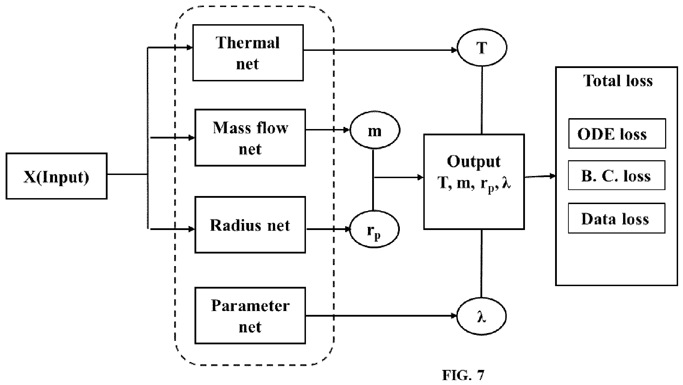

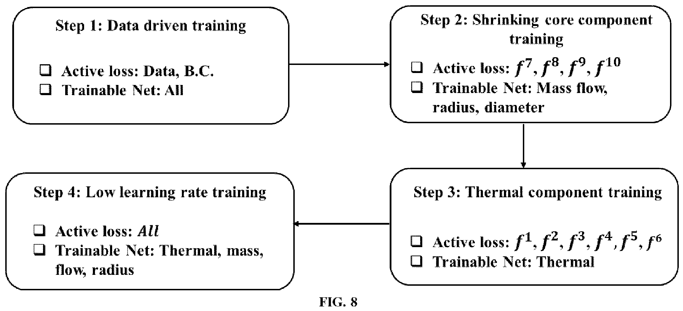

The sequential training scheme follows training the neural network using only sparse measurements and subsequently, training the sub-process governing equation components of the domain-aware system while only keeping the corresponding neural net trainable and freezing the other networks with the specific sub-process governing equation component loss. Once each component is trained individually, the entire neural network architecture is trained with a low learning rate to adjust the whole network. This training enhances the convergence rate and develops a robust DADD model for industrial entities. The inference module 110D generate predictions in a fraction of seconds, enabling optimization and control of operations of the industrial entity. The integrated architecture of the plurality of modules and sub-modules depicting the architectural overview of the system 100 is shown in FIG. 2-3 and explained in conjunction with a method flow diagram depicted in FIG. 4. Further, the memory 102 may comprise information pertaining to input(s)/output(s) of each step performed by the processor(s) 104 of the system 100 and methods of the present disclosure. Further, the memory 102 includes a database 108. The database (or repository) 108 may include a plurality of abstracted piece of code for refinement and data that is processed, received, or generated as a result of the execution of the plurality of modules. The system 100 comprises of knowledge repositories 112 shown as internal to the system 100. It will be noted that, in alternate embodiments, the knowledge repositories 112 can also be implemented external to the system 100. The external database is communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the architecture of the system 100 depicted in FIG. 2, detailed arrangement of components for prediction of process descriptors in FIG. 3, method of domain aware modeling of industrial entity in FIG. 4, sequential training scheme for neural network in FIG. 5, use case specific representation of a rotary kiln in FIG. 6, GNNA for the rotary kiln in FIG. 7 and sequential training scheme for DAAD model for rotary kiln in FIG. 8.

FIG. 2 illustrates an functional components for DADD modeling of industrial entity, according to some embodiments of the present disclosure.

As shown in FIG. 2, designing a DADD model 110 capable of predicting process descriptors of the process governing equation components governing specific operation of the industrial entity 202 requires domain centric training. Once the system 100 identifies an operation to be monitored, it acquires a plurality of PGEs and a plurality of process descriptors from a physics-based knowledge base 204. The PGEs are utilized to build the DADD model 110 and derives a correlation as to how the values of the process descriptors change when one or more of the known process parameters and spatio-temporal co-ordinates of the entity changes. One or more PGEs may also be a state equation, an equation describing the state of the system. The physics-based knowledge base 204 also comprises corresponding properties and parameters of the PGEs. The physics-based knowledge base 204 is kept flexible, allowing for updates as needed or in alignment with operational requirements. Once PGEs governing the process are acquired, the system 100 receives the spatio-temporal information of the industrial entity from the equipment centric repositories 206. The spatio-temporal information comprises design and material specifics of the industrial entity. Further, system 100 also acquires a real-time sparse measurements from a plant sensor database 208. These sparse measurements along with the PGEs and spatio-temporal information are sourced to design a neural network architecture 210. While designing the neural network architecture 210, the network design module 110B receives information from the physics-based knowledge base 204, the equipment centric repositories 206, and the plant sensor database 208. The network design module 110B designs the neural network with a group architecture comprising multiple individual neural network sub-set parameter for each sub-process governing equation component within a single neural network architecture. The network design module 110B also designs a network to estimate unknown or untuned parameters of the PGEs. The network design module 110B is comprises a plurality of neural network sub-set parameter wherein each sub-process governing equation component of the PGEs is reinforced by each neural network sub-set, and wherein each neural network sub-set parameter predicts the plurality of process descriptors corresponding to each sub-process governing equation component. Once the neural network architecture is designed based on sub-process governing equation component of the PGEs, the sequential training module 110C generates a sequential training scheme based on domain knowledge acquired from physics-based knowledgebase 204, neural network architecture, and the interrelationship of multiple sub-process governing equation components. The sequential training module 110C trains the network using sequentially generated schemes. For instance, in a first step, the neural network architecture is trained using only sparse measurements. Then, in the second step, the neural network architecture is trained with specific sub-process governing equation component loss. The neural network architecture is trained on the one or more sub-process governing equation component of the PGEs while only keeping the corresponding neural network sub-set parameters trainable and freezing the rest of the neural network sub-set parameters. Similarly, if other sub-process governing equation components are involved in the operation, then the neural network sub-set parameters are assigned for that component and is trained accordingly. Once each component is trained individually, the entire neural network architecture is trained with a low learning rate to obtain a DADD model 110. The DADD model 110 generates predictions in a fraction of seconds, enabling optimization and control of operations associated with the industrial entity.

FIG. 3 is an illustrative flow diagram involving components for predicting process descriptors vital for operational efficiency of the industrial entity using the domain aware model, according to some embodiments of the present disclosure.

As illustrated in the FIG. 3, the DADD model 110 capable of predicting one or more process descriptors, vital to be monitored for the efficient operation of the industrial entity, involves complex inter-relationships among various components. The DADD model 110 is the PGEs based framework having improved prediction capability. The sequential training and tuning approach estimates neural network architecture parameters for the PGEs and missing parameters for the PGEs. In an embodiment, the DADD model 110 employs parameter adjustments alongside the solution of plurality of PGEs like, set of Differential Algebraic Equations (DAE). At 302, while predicting the process descriptors for an industrial entity that involves an operation starting from input of raw material to obtain processed material, the industrial entity undergoes a wide variety of transformation such as physical, chemical, thermal and physicochemical transformation. All such transformations are mathematically expressed as PGEs. While predicting the process descriptors defining a specific operation of the industrial entity, the DADD model 110 receives domain knowledge from a variety of sources. At 304, the physics-based knowledgebase 204 comprises of properties and parameter database and another database for process governing equation. At 306, the extractor module receives a plurality of process descriptors from properties and parameter database. The Extractor module extracts and determines the number of sub-process governing equation components from a process governing equation and send the extracted sub-process governing equation components to the network design module at 308. The network design module also receives a plurality of PGEs from the process governing equation database. Once the sub-process governing equation components are determined, a neural network with a group architecture comprising multiple individual neural network sub-set parameters for each sub-process governing equation component within a single network is designed using the network design module. Subsequently, the sequential training module trains the designed neural network. Initially, it generates sequential training schemes based on domain knowledge and the interrelationship of multiple sub-process governing equation components. The sequential training module also receives an input from the communication module at 310. At 312, a plurality of spatiotemporal domain co-ordinates of an industrial entity are captured by the equipment centric repositories 206 and plant sensor database 208. The equipment centric repositories 206 comprises of equipment data repository and laboratory analysis database. The plant sensor database 208 comprises of a plurality of spatiotemporal domain co-ordinates of the industrial entity. All such information available at 312 is sent to the communication module at 310. The communication module further transfers the relevant information to the sequential training module. The sequential training module trains the designed neural network architecture. Initially, it generates sequential training schemes based on domain knowledge and the interrelationship of multiple sub-process governing equation components. The DADD model 110 is thus trained as per the sequential training scheme wherein each neural network sub-set parameter of the sub-process governing equation component is selectively trained to predict corresponding process descriptor. Based on processing of the DADD model 110, the inference module 110D generates predictions. The predictions are comparatively quick and accurate due to systematic approach of breaking PGEs into sub-process governing equation components and handling of such sub-process governing equation components by an individual network sub-set. According to an embodiment of the present disclosure, the communication module operates a two-way channel and receives the predicted process descriptors from the inference module 110D and subsequently, pass the predicted process descriptors to the industrial entity. Therefore, the DADD model 110 is trained to predict the process descriptors for the industrial entity.

FIGS. 4A and 4B are flow diagrams of an illustrative method 400 for domain aware modeling of industrial entity, according to some embodiments of the present disclosure.

The steps of the method 400 of the present disclosure will now be explained with reference to the components or blocks of the system 100 as depicted in FIG. 1 through FIG. 8. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously. At step 402 of the method 400, the one or more hardware processors 104 are configured to receive a plurality of PGEs, a plurality of process descriptors and a plurality of spatiotemporal domain co-ordinates of an industrial entity. The system 100 comprises of various databases having domain knowledge and sparse measurements of the industrial entity for which process descriptor predictions are sought. Within physics-based knowledgebase, one finds the process equations of industrial entity, alongside their corresponding properties and parameters, all stored within the Properties and Parameter Database. This database is flexible and allows for updates as needed or in alignment with operational requirements. Equipment centric repository stores design and material specifics are stored in equipment data repository and laboratory analysis database. Real-time sparse measurements are stored in the Plant Sensor database. Data pre-processing is performed using various modules designated for specific operations. The Plant Sensor and Laboratory database via a communication module 310 receives real-time sparse measurements and laboratory data. Subsequently, it performs data preprocessing tasks, including data averaging, outlier removal, and other essential data cleaning procedures. Techniques such as normalization, scaling, or imputation are employed to ensure that the data is appropriately formatted for training the model. The Extractor module 110A retrieves information about process governing equation from a repository of PGEs. It extracts and identifies the number of sub-process governing equation components from the PGEs. For instance, in a rotary kiln with a reactive bed, it can extract and identify the thermal and calcination reaction components from the domain-aware model of the kiln. At step 404 of the method 400, the one or more hardware processors 104 are configured to receive real time sparse measurements of the plurality of process descriptors of the industrial entity. The communication module 310 receives the real-time sparse measurements from the plant sensor database. This is required to assess the current conditions of the industrial entity and enable accurate predictions of the process descriptors by the DADD model 110. The DADD model 110 comprises multiple sub networks each consists of multiple hidden layers, and the propagation through each layer is governed by the specific equations. In an embodiment, each sub-network of the multiple sub networks for the rotary kiln model is represented by the following equations:

For a neural network (a feed forward neural network) with $L$ layers, where the input is **X** and the output is **Y**:

Input Layer

$$Z^0 = X$$

Hidden Layers (for $l$ = 1, 2, ..., $L$ - 1 )

$$A^l = W^l Z^{l-1} + b^l$$

$$Z^l = f(A^l)$$

Output Layer

$$A^L = W^L Z^{L-1} + b^L$$

$$Y = g(A^L) \tag{1}$$

where $g$ is typically the identity function for regression tasks or the softmax function for classification tasks; and wherein

**X:** Input matrix where each column represents a spatiotemporal coordinate for the industrial entity and each row represents a sample.
**Y:** Output matrix where each column represents the process descriptor for the corresponding input row.
$W^l$: Weight matrix for the $l$-th layer.
$b^l$: Bias vector for the $l$-th layer.
$f$: Activation function (applied element-wise).

At step 406 of the method 400, the one or more hardware processors 104 are configured to extract a plurality of sub-process governing equation component from the plurality of PGEs. Once the extractor module 110A retrieves information about PGEs from a repository of PGEs. It extracts and identifies the number of sub-process governing equation components from the PGEs. Also, while extracting individual sub-process governing equation components, missing components are identified and accordingly, neural network architecture is modified by assigning an extra neural network sub-set parameter to predict the missing components. At step 408 of the method 400, the one or more hardware processors 104 are configured to prepare, a GNNA comprising a plurality of neural network sub-set parameters wherein each sub-process governing equation component is reinforced by each neural network sub-set parameter, and wherein each neural network sub-set parameter predicts the plurality of process descriptors corresponding to each sub-process governing equation component. The neural network with a group architecture comprising multiple individual neural network sub-sets for each sub-process governing equation component within a single network is designed using the network design module.

Based on the individual sub-process governing equation components identified as well as assessing unknown/missing components, if any, the neural network is designed such that each component is assigned an individual neural network sub-set parameter, and all the sub-sets are within the common umbrella forming the grouped DAAD architecture. At step 410 of the method 400, the one or more hardware processors 104 are configured to generate, a sequential training scheme for the GNNA wherein, order of training each sub-process governing equation component is specified based on a plurality of pre-defined criteria. This key component utilizes domain knowledge to generate sequential training schemes for training PINNs to model industrial entity. With these generated sequential training schemes, individual networks corresponding to each sub-process governing equation component of the PGEs are trained sequentially while keeping other networks sub-set architecture parameters unchanged. Subsequently, in the next phase, all individual networks are trained collectively with a low learning rate. Apart from domain knowledge, few other pre-defined criteria controls the sequential training, such as:

a) inter-relationship of sub-process governing equation components with each other,
b) availability of sparse measurements of the process descriptors, and
c) missing process parameters.

At step 412 of the method 400, the one or more hardware processors 104 are configured to train the GNNA based on the sequential training scheme wherein each neural network sub-set parameter of the sub-process governing equation component is selectively trained to predict corresponding process descriptor. Each neural network sub-set parameter corresponding to the predicted process descriptor is selectively trained by keeping the remaining GNNA unchanged followed by applying a plurality of loss function. The first loss function comprises an error between real time sparse measurements of the plurality of process descriptor and the predicted process descriptor, and the second loss function is a residual of the sub-process governing equations. Next, optimization is carried out to minimize both losses associated with the multiphysics components of the PGEs. The data loss is expressed as:

$$L_{Total} = w_{PGE}\, L_{PGE} + w_{data}\, L_{data} \qquad (2)$$

Here $L_{PGE}$ represents the residual of the PGEs, and $L_{data}$ signifies the data loss calculated for sparse measurements. $w_{PGE}$ denotes the weight attributed to the PGEs based loss and $w_{data}$ denotes the weight attributed to the data-based loss. The sequential training addresses the challenge of solving industrial systems by exploring and discovering adjusted parameters to enhance the reliability of model.

At step 414 of the method 400, the one or more hardware processors 104 are configured to fine tune, the GNNA wherein a plurality of parameters associated with each neural network sub-set parameter of the trained DADD model architecture is kept trainable. This trained domain aware model utilizes an inference module of the system 100 to generate predictions in a fraction of seconds, enabling optimization and control of operations. Such sequential training and tuning approach models the operation of the industrial entities (such as heat transfer within the inert bed of a rotary kiln, mixing in reactor, chemical reaction in blast furnace etc). This approach identifies modified parameters of the system and develops a DADD model with finely tuned parameters.

USE CASE-I:

THE PREDICTION ACCURACY OF THE DOMAIN AWARE MODEL

An example scenario depicting the efficiency of the disclosed method of identifying process descriptors governing heat transfer mechanism in the rotary kiln equipment utilizing the system 100 is presented below. A rotary kiln is a tilted cylindrical vessel which rotates around its axial position. The feedstock material is introduced at the upper end of the rotary kiln, while hot gas is passed at the lower end. The material progresses from the higher end to the lower end, undergoing heating due to the hot gas. The use of rotary kiln is prevalent in various manufacturing engineering like Iron-Ore, Steel, Cement, paper-pulp etc. In the rotary kiln, granular material is introduced from one end, while natural gas firing is executed from the opposite end through burner arrangements as shown in FIG. 6.

Obtaining measurements in rotary kilns can be complex and when available it tends to be sparse. Therefore, there is a necessity to optimize and control the rotary kiln operation. In the present disclosure, PINN is deployed that incorporates physical principles into the structure of the neural network, allowing it to smoothly integrate data-driven insights with the fundamental laws governing the system. The processes in rotary kiln can be mathematically expressed as the Differential algebraic equations (DAE). Moya & Lin (2023) used DAE-PINN to simulate complex engineering problems like power networks by combining Runga-Kutta time-stepping schemes with PINN. Very few attempts have been made to solely utilize PINN for modeling of Differential Algebraic Equation (DAE) systems, as demonstrated by Stiasny et al. (2023) for Power Networks. However, they often encounter convergence challenges due to system's complexity. In the present disclosure, the thermal model of the rotary kiln comprises two ordinary differential equations (ODEs) and two non-linear algebraic equations, alongside a shrinking core model for the calcination kinetics, involving three ODE equations. Due to the coupling of these equations and the non-normalized nature of the system with varying orders of magnitude of dependent variable, the conventional approach is not conducive to rapid convergence. Therefore, a sequential training with successive network parameter freezing approach for estimating unknown parameters and for faster convergence is adopted. The PGEs for the rotary kiln comprises two main sub-process governing equation components: the heat transfer and the calcination reaction kinetics. The heat transfer sub-process governing equations focuses on heat transfer within the rotary kiln, while the calcination reaction kinetics sub-process governing equation component deals with the chemical processes of calcination. These two components are intricately coupled with each other.

The thermal model of the rotary kiln consists of two ordinary differential equations describing the variation in gas and solid temperatures, along with two nonlinear algebraic equations used to estimate the wall and shell temperatures. The PGEs involved in thermal model of the rotary kiln are expressed below:

$$\dot{m}_s C_{p_s} \frac{dT_s}{dx} = Q_{g \to s}^{cv} + Q_{w \to s}^{cd} + Q_{g \to s}^{rd} + Q_{w \to s}^{rd} + \sum \Delta H \tag{3}$$

$$\dot{m}_g C_{p_g} \frac{dT_g}{dx} = -(Q_{g \to s}^{cv} + Q_{g \to w}^{cv} + Q_{g \to s}^{rd} + Q_{g \to w}^{rd}) \tag{4}$$

$$Q_{w \to ext} = -Q_{w \to s}^{cd} - Q_{w \to s}^{rd} + Q_{g \to w}^{cv} + Q_{g \to w}^{rd} \tag{5}$$

$$Q_{w \to sh} = -Q_{w \to s}^{cd} - Q_{w \to s}^{rd} + Q_{g \to w}^{cv} + Q_{g \to w}^{rd} \tag{6}$$

Wherein, $\dot{m}_s$ : *mass flow of Solid ($\frac{kg}{s}$), $m\cdot_g$ : mass flow of Gas ($\frac{kg}{s}$),*

$C_{p_s}$ : *Specific heat capacity of Solid (J/kg.K),*
$C_{p_g}$ : *Specific heat capacity Gas (J/kg.K),*
$Q_{g \to s}^{cv}$ : *rate of heat transfer by convection between gas and solid (J/m),*

$Q_{w \to s}^{cd}$ : *rate of heat transfer by conduction between wall and solid(J/m),*

$Q_{g \to s}^{rd}$ : *rate of heat transfer by radiation between gas and solid(J/m),*

$Q_{w \to s}^{rd}$ : *rate of heat transfer by radiation between wall and solid(J/m),*

$Q_{g \to w}^{cv}$ : *rate of heat transfer by convection between the gas and the wall(J/m),*

$Q_{w \to ext}$ : *net heat transfer between wall and external environment(J/m),*
$Q_{w \to sh}$ : *net heat transfer between the wall and the shell(J/m), and*
$\Delta H$ : *Heat absorbed during calcination reaction (J/m)*

A shrinking core model is selected as the calcination chemical reaction kinetics model with surface reaction and is given by:

$$CaCO_3(s) \rightarrow CaO(s) + CO_2(g) \qquad (7)$$

The calcination model consists of three ordinary differential equations describing the solid mass flow, gas mass flow, and radius of the particle along the axis.

$$\frac{\partial \dot{m}_s}{\partial x} = -d\dot{m}_{Co2} \qquad (8)$$

$$\frac{\partial \dot{m}_g}{\partial x} = -d\dot{m}_{Co2} \qquad (9)$$

$$\frac{\partial r_z}{\partial x} = -\frac{M_{CaCO3} K_r \, e^{\frac{-E_r}{RT_b}}}{\rho_{CaCO3} U} \qquad (10)$$

Wherein,

$r_z$ : radius of limestone particle (m)
$r_o$ : Initial radius of limestone particle (m)
$M_{CaCO3}$ : Molecular weight of limestone (g/mol)
$\rho_{CaCO3}$ : density of limestone (Kg/m3)
$U$ : Solid velocity (m/s)
$E_r$ : Activation energy (J/mol)
$K_r$ : Pre-exponential factor (mol/m2s)

The PGEs of the rotary kiln consists of both differential and algebraic equations, incorporating multiple sub-process governing equation components. Developing the PINN for the rotary kiln using conventional approaches may encounter convergence issues. Additionally, tuning the activation energy and pre-exponential factor of the calcination model can pose challenges to convergence. Therefore, a sequential training is implemented and tuned to enhance the convergence of the PINN.

While training the PINN for the heat transfer operation of the rotary kiln, following loss functions were estimated during sequential training of the model:

Thermal Loss ($f^1$ - $f^6$)

$$f^1 = \dot{m}_s C_{p_s} \frac{dT_s}{dx} - (Q_{g \rightarrow s}^{cv} + Q_{w \rightarrow s}^{cd} + Q_{g \rightarrow s}^{rd} + Q_{w \rightarrow s}^{rd} + \sum \Delta H) \qquad (11)$$

$$f^2 = \dot{m}_g C_{p_g} \frac{dT_g}{dx} - (Q_{g \rightarrow s}^{cv} + Q_{g \rightarrow w}^{cv} + Q_{g \rightarrow s}^{rd} + Q_{g \rightarrow w}^{rd}) \qquad (12)$$

$$f^3 = Q_{w \rightarrow ext}(-Q_{w \rightarrow s}^{cd} - Q_{w \rightarrow s}^{rd} + Q_{g \rightarrow w}^{cv} + Q_{g \rightarrow w}^{rd}) \qquad (13)$$

$$f^4 = Q_{w \rightarrow sh} - (Q_{w \rightarrow s}^{cd} - Q_{w \rightarrow s}^{rd} + Q_{g \rightarrow w}^{cv} + Q_{g \rightarrow w}^{rd}) \qquad (14)$$

$$f^5 = \dot{m}_s C_{p_s} \frac{dT_s}{dx} + \sum \Delta H + Q_{w \rightarrow sh} - \dot{m}_g C_{p_g} \frac{dT_g}{dx} \qquad (15)$$

$$f^6 = Q_{w \rightarrow sh} - Q_{w \rightarrow ext} \qquad (16)$$

Calcination loss (($f^7$ - $f^9$))

$$f^7 = \frac{\partial r_z}{\partial x} - \frac{M_{Caco3} K exp^{\frac{E}{RT_b}}}{\rho_{caco3} U} \tag{17}$$

$$f^8 = \frac{\partial \dot{m}_s}{\partial x} - d\dot{m}_{Co2} \tag{18}$$

$$f^9 = \frac{\partial \dot{m}_g}{\partial x} - d\dot{m}_{Co2} \tag{19}$$

Calcination constraint loss (($f^{10}$)

$$f^{10} = Percent\ Calcination_{z=z} - Predicted\ Percent\ Calcination_{z=z} \tag{20}$$

Data Loss ($\mathcal{L}_{data}$)

$$\boldsymbol{\mathcal{L}_{data}} = \sum_{i=1}^{N_s}(\boldsymbol{T_{s_i}} - \widehat{\boldsymbol{T_{s_i}}})^2 + \sum_{i=1}^{N_g}(\boldsymbol{T_{g_i}} - \widehat{\boldsymbol{T_{g_i}}})^2 + \sum_{i=1}^{N_w}(\boldsymbol{T_{w_i}} - \widehat{\boldsymbol{T_{w_i}}})^2 \tag{21}$$

Boundary Condition Loss ($\mathcal{L}_{BC}$)

$$\mathcal{L}_{BC} = (T_{s_{z=0}} - \widehat{T_{s_{z=0}}})^2 + (T_{g_{z=z}} - \widehat{T_{g_{z=z}}})^2 + (\dot{m}_{s_{z=0}} - \widehat{\dot{m}_{s_{z=0}}})^2 + (r_{p_{z=0}} - \widehat{r_{p_{z=0}}})^2 +$$

$$(\dot{m}_{g_{z=z}} - \widehat{\dot{m}_{g_{z=z}}})^2 \tag{22}$$

Further, the extractor module extracts the two sub-process governing equation components, namely the thermal and calcination sub-process governing equation components, from the PGEs of the rotary kiln. The network design module generates the design of a grouped neural network comprising four individual networks for thermal process, mass flow process, radius, and parameter as shown in FIG. 7. The configuration of the GNNA is given below in Table-1:

Table-1

| GNNA configuration | | |
|---|---|---|
| Number of layers | Thermal network sub-set (for thermal process) | 3 |
| | Mass flow network sub-set (for mass flow process) | 3 |
| | Radius network sub-set (for radius) | 3 |
| | Parameter network sub-set (for parameter) | 3 |
| Layer wise neuron configuration | Thermal network sub-set (for thermal process) | [32,16,1] |
| | Mass flow network sub-set (for mass flow process) | [32,16,1] |
| | Radius network sub-set (for radius) | [32,16,1] |
| | Parameter network sub-set (for parameter) | [32,16,1] |
| Activation function | | *Tanh* |
| Optimizer | | Adam |
| Collection points | | 1000 |
| Loss metric | | Mean Sum Squared |
| System description | | Ubuntu:20.04, 20GB RAM |

Here, the output of each network is combined, and then a loss function is calculated to train the entire network. The network sub-set for heat transfer sub-process governing equation component predicts the four temperatures, the network sub-set for mass flow sub-process governing equation component predicts the mass flow of gas and solid, the network subset for radius parameter predicts the radius of the particle, and the network subset for parameter predicts the tuned values of activation energy and pre-exponential factor. The sequential training module creates sequential training schemes leveraging domain knowledge, where each sub-set of the group architecture undergoes training while the others remain fixed. Afterwards, all components are trained collectively using a reduced learning rate. The sequential training scheme generated by the neural network architecture for the rotary kiln is shown in FIG. 8. Based on the training scheme generated, the model trains the neural network. The trained DADD model provides reasonably accurate predictions of descriptor variables. Due to the operational constraints of rotary kilns, monitoring of descriptor variable such as internal temperatures is very complex. Typically, only the outer shell temperature is measured, providing sparse and inadequate data for effective process control. Therefore, the predictions from the DADD model are very useful for monitoring and effectively controlling the kiln.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Therefore, a DADD model for predicting process descriptors critical for an operation of the industrial entity is disclosed. The model considers a plurality of PGEs, a plurality of process descriptors and a plurality of spatiotemporal domain co-ordinates of the industrial entities to prepare the DADD model. The DADD model accurately predicts the process descriptors deviating from standard parameters that are critical to be identified for an efficient operation of the industrial entity. The domain aware model utilizes a GNNA comprising a plurality of neural network sub-set parameters specific to each sub-process governing equation component. The neural network sub-set parameters undergo sequential training based on a plurality of pre-defined criteria to predict process descriptors critical for the operation of the industrial entity. The disclosed method and system provide faster convergence of PGEs compared to conventional training techniques. The disclosed method and system provide an efficient domain aware data driven model.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (400) for training a domain aware data driven (DADD) model, the method comprises:

   receiving (402), via one or more hardware processors, a plurality of process governing equations (PGEs), a plurality of process descriptors and a plurality of spatiotemporal domain coordinates of an industrial entity;
   receiving (404), via the one or more hardware processors, real-time sparse measurements of the plurality of process descriptors of the industrial entity;
   extracting (406), via the one or more hardware processors, a plurality of sub-process governing equation components from the PGEs;
   preparing (408), via one or more hardware processors, a grouped neural network architecture (GNNA) comprising a plurality of neural network sub-set parameters, wherein each sub-process governing equation component is reinforced by each neural network sub-set parameter of the plurality of neural network sub-set parameters, and wherein each of the plurality of neural network sub-set parameters predicts the plurality of process descriptors associated with each of the plurality of sub-process governing equation components;
   generating (410), via the one or more hardware processors, a sequential training scheme for the GNNA, wherein an order of training each of the plurality of sub-process governing equation components is specified based on a plurality of pre-defined criteria;
   training (412), via the one or more hardware processors, the GNNA based on the sequential training scheme wherein the neural network sub-set parameter associated with each of the plurality of sub-process governing equation components is selectively trained to predict the associated descriptor; and
   fine tuning (414), via the one or more hardware processors, the GNNA wherein a plurality of parameters associated with each of the plurality of neural network sub-set parameters of the DADD is trained.

2. The method as claimed in claim 1, wherein each neural network sub-set parameter associated with the predicted process descriptor is selectively trained by keeping a plurality of other GNNAs unchanged followed by applying a plurality of loss function wherein,

   a first loss function of the plurality of loss functions comprises an error between real time sparse measurements of the plurality of process descriptors and a plurality of predicted process descriptors, and
   a second loss function of the plurality of loss functions is a summation of residual of the plurality of sub-process governing equations.

3. The method as claimed in claim 1, wherein the sequential training scheme is based on a set of pre-defined criteria comprising:

   a) inter-relationship of the plurality of sub-process governing equation components with each other,
   b) availability of sparse measurements of the process descriptors,
   c) domain knowledge, and
   d) one or more missing process parameters.

4. The method as claimed in claim 1, wherein the plurality of neural network sub-set parameters are additionally assigned for a plurality of missing process parameters of the PGEs prior to sequential training scheme generation.

5. A system (100), comprising:

   a memory (102) storing instructions;
   one or more communication interfaces (106); and

one or more hardware processors (104) coupled to the memory (102) via the one or more communication interfaces (106), wherein the one or more hardware processors (104) are configured by the instructions to:

> receive a plurality of process governing equations (PGEs), a plurality of process descriptors and a plurality of spatiotemporal domain coordinates of an industrial entity;
> receive real-time sparse measurements of the plurality of process descriptors of the industrial entity;
> extract a plurality of sub-process governing equation components from the PGEs;
> prepare a grouped neural network architecture (GNNA) comprising a plurality of neural network sub-set parameters, wherein each sub-process governing equation component is reinforced by each neural network sub-set parameter of the plurality of neural network sub-set parameters, and wherein each of the plurality of neural network sub-set parameters predicts the plurality of process descriptors associated with each of the plurality of sub-process governing equation components;
> generate a sequential training scheme for the GNNA, wherein an order of training each of the plurality of sub-process governing equation components is specified based on a plurality of pre-defined criteria;
> train the GNNA based on the sequential training scheme wherein the neural network sub-set parameter associated with each of the plurality of sub-process governing equation components is selectively trained to predict the associated descriptor; and
> fine tune the GNNA wherein a plurality of parameters associated with each of the plurality of neural network sub-set parameters of the DADD is trained.

6.  The system as claimed in claim 5, wherein each neural network sub-set parameter associated with the predicted process descriptor is selectively trained by keeping a plurality of other GNNAs unchanged followed by applying a plurality of loss function wherein,

> a first loss function of the plurality of loss functions comprises an error between real time sparse measurements of the plurality of process descriptors and a plurality of predicted process descriptors, and
> a second loss function of the plurality of loss functions is a summation of residual of the plurality of sub-process governing equations.

7.  The system as claimed in claim 5, wherein the sequential training scheme is based on a set of pre-defined criteria comprising:

> a) inter-relationship of the plurality of sub-process governing equation components with each other,
> b) availability of sparse measurements of the process descriptors,
> c) domain knowledge, and
> d) one or more missing process parameters.

8.  The system as claimed in claim 5, wherein the plurality of neural network sub-set parameters are additionally assigned for a plurality of missing process parameters of the PGEs prior to sequential training scheme generation.

9.  One or more non-transitory machine-readable information storage mediums comprising one or more instructions which when executed by one or more hardware processors cause:

> receiving a plurality of process governing equations (PGEs), a plurality of process descriptors and a plurality of spatiotemporal domain coordinates of an industrial entity;
> receiving real-time sparse measurements of the plurality of process descriptors of the industrial entity;
> extracting a plurality of sub-process governing equation components from the PGEs;
> preparing a grouped neural network architecture (GNNA) comprising a plurality of neural network sub-set parameters, wherein each sub-process governing equation component is reinforced by each neural network sub-set parameter of the plurality of neural network sub-set parameters, and wherein each of the plurality of neural network sub-set parameters predicts the plurality of process descriptors associated with each of the plurality of sub-process governing equation components;
> generating a sequential training scheme for the GNNA, wherein an order of training each of the plurality of sub-process governing equation components is specified based on a plurality of pre-defined criteria;
> training the GNNA based on the sequential training scheme wherein the neural network sub-set parameter associated with each of the plurality of sub-process governing equation components is selectively trained to predict the associated descriptor; and

fine tuning the GNNA wherein a plurality of parameters associated with each of the plurality of neural network sub-set parameters of the DADD is trained.

10. The one or more non-transitory machine-readable information storage mediums as claimed in claim 9, wherein each neural network sub-set parameter associated with the predicted process descriptor is selectively trained by keeping a plurality of other GNNAs unchanged followed by applying a plurality of loss function wherein,

a first loss function of the plurality of loss functions comprises an error between real time sparse measurements of the plurality of process descriptors and a plurality of predicted process descriptors, and
a second loss function of the plurality of loss functions is a summation of residual of the plurality of sub-process governing equations.

11. The one or more non-transitory machine-readable information storage mediums as claimed in claim 9, wherein the sequential training scheme is based on a set of pre-defined criteria comprising:

(a) inter-relationship of the plurality of sub-process governing equation components with each other,
(b) availability of sparse measurements of the process descriptors, domain knowledge, and
(c) one or more missing process parameters.

12. The one or more non-transitory machine-readable information storage mediums as claimed in claim 9, wherein the plurality of neural network sub-set parameters are additionally assigned for a plurality of missing process parameters of the PGEs prior to sequential training scheme generation.

**System 100**

**Processors(s) 104**

**I/O Interface(s) 106**

**Knowledge repositories 112**

**Memory 102**

**Database 108**

**DOMAIN AWARE DATA DRIVEN (DADD) MODEL 110**

**Extractor module 110A**

**Network design module 110B**

**Sequential training module 110C**

**Inference module 110D**

**FIG. 1**

100 ⟍

204

Physics based
knowledgebase

202

206

Industrial
equipment

Equipment
centric
repositories

208

Plant sensor
database

210

Neural
network
architecture
design

212

Sequential
training of
neural
network
architecture

214

DADD MODEL
110

FIG. 2

FIG. 3

400

receiving a plurality of process governing equations (PGE), a plurality of process descriptors and a plurality of spatiotemporal domain co-ordinates of an industrial entity

402

receiving real time sparse measurements of the plurality of process descriptors of the industrial entity

404

extracting a plurality of sub-process governing equation component from the plurality of process governing equations (PGEs)

406

preparing a grouped neural network (GNNA) architecture comprising a plurality of neural network sub-set wherein each sub-process governing equation component is reinforced by each neural network sub-set, and wherein each neural network sub-set predicts the plurality of process descriptors corresponding to each sub-process governing equation component

408

A

FIG. 4A

(A)

generating, a sequential training scheme for the GNNA wherein, order of training each sub-process governing equation component is specified based on a plurality of pre-defined criteria — 410

training, the GNNA based on the sequential training scheme wherein each neural network sub-set of the sub-process governing equation component is selectively trained to predict corresponding process descriptor — 412

fine tuning, the GNNA wherein a plurality of parameters associated with each neural network sub-set of the GNNA is trained. — 414

FIG. 4B

receive the number of physics components (N) and neural network architecture — 502

train the neural network using only sparse measurements from equipment sensor database — 504

*For* $i = 1$ *to* $N$:
train the neural network with physics equation loss of $i^{th}$ component with corresponding $i^{th}$ individual network being trainable — 506

$i < N$

Yes

No

train the neural network with multi-physics equation and sparse measurement loss using low learning rate — 508

FIG. 5

**FIG. 6**

FIG. 7

Step 1: Data driven training

❑ Active loss: Data, B.C.
❑ Trainable Net: All

Step 2: Shrinking core component training

❑ Active loss: $f^7, f^8, f^9, f^{10}$
❑ Trainable Net: Mass flow, radius, diameter

Step 4: Low learning rate training

❑ Active loss: *All*
❑ Trainable Net: Thermal, mass, flow, radius

Step 3: Thermal component training

❑ Active loss: $f^1, f^2, f^3, f^4, f^5, f^6$
❑ Trainable Net: Thermal

FIG. 8

# EUROPEAN SEARCH REPORT

**Application Number**

EP 25 18 2554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEN MOSELEY ET AL: "Finite Basis Physics-Informed Neural Networks (FBPINNs): a scalable domain decomposition approach for solving differential equations", ARXIV.ORG, CORNELL UNIVERSITY LIBRARY, 201 OLIN LIBRARY CORNELL UNIVERSITY ITHACA, NY 14853, 16 July 2021 (2021-07-16), XP091012442, * page 3, paragraph 4 - page 4, paragraph 1 * * page 5; figure 1 * * page 6, paragraph 5 - paragraph 6 * * page 7; figure 2 * * page 7, paragraph 5 - page 8, paragraph 4 * * Equation (2); page 4 * * page 8; figure 3 * * figure 4 * * page 11, paragraph 3 * * page 21 - page 5 * | 1-12 | INV. G06N3/042 G06N3/045 G06N20/20 G05B19/042 G05B19/418 G05B23/02 ADD. F27B7/00 G05B13/02 |
| A | SEPE MARZIA ET AL: "Optimization Method for an Improved Training of Physics Informed Neural Networks", 2023 7TH INTERNATIONAL CONFERENCE ON SYSTEM RELIABILITY AND SAFETY (ICSRS), IEEE, 22 November 2023 (2023-11-22), pages 103-109, XP034512137, DOI: 10.1109/ICSRS59833.2023.10381383 [retrieved on 2024-01-09] * page 104, left-hand column, paragraph 2 - right-hand column, last paragraph; figure 1 * * page 106, right-hand column, paragraph 2 - paragraph 3 * | 1-12 | TECHNICAL FIELDS SEARCHED (IPC) G06N G05B G06F F27D F27B |

-/--

The present search report has been drawn up for all claims

| Place of search | Date of completion of the search | Examiner |
|---|---|---|
| Munich | 5 November 2025 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 18 2554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CUOMO SALVATORE ET AL: "Scientific Machine Learning Through Physics-Informed Neural Networks: Where we are and What's Next", JOURNAL OF SCIENTIFIC COMPUTING, SPRINGER US, NEW YORK, vol. 92, no. 3, 26 July 2022 (2022-07-26), XP037917814, ISSN: 0885-7474, DOI: 10.1007/S10915-022-01939-Z [retrieved on 2022-07-26] * page 33, paragraph 2 - page 34, paragraph 1 * ----- | 1-12 | |
| A | US 2012/150507 A1 (GALLESTEY ALVAREZ EDUARDO [CH] ET AL) 14 June 2012 (2012-06-14) * paragraph [0026] - paragraph [0032] * * paragraph [0014] - paragraph [0016] * * paragraph [0064] - paragraph [0085] * ----- | 1-12 | |
| A | EP 1 396 770 B1 (POWITEC INTELLIGENT TECH GMBH [DE]) 4 July 2007 (2007-07-04) * paragraph [0009] - paragraph [0014] * * claims 1-6 * ----- | 1-12 | **TECHNICAL FIELDS SEARCHED (IPC)** |

The present search report has been drawn up for all claims

| Place of search | Date of completion of the search | Examiner |
|---|---|---|
| Munich | 5 November 2025 | Herri, Edmond |

EPO FORM 1503 03.82 (P04C01)

page 2 of 2

## ANNEX TO THE EUROPEAN SEARCH REPORT
## ON EUROPEAN PATENT APPLICATION NO.

EP 25 18 2554

05-11-2025

| Patent document cited in search report | | Publication date | Patent family member(s) | | Publication date |
|---|---|---|---|---|---|
| US 2012150507 | A1 | 14-06-2012 | BR | PI1014754 A2 | 19-04-2016 |
| | | | CA | 2765793 A1 | 23-12-2010 |
| | | | CN | 102483613 A | 30-05-2012 |
| | | | EP | 2273327 A1 | 12-01-2011 |
| | | | EP | 2446329 A1 | 02-05-2012 |
| | | | PL | 2446329 T3 | 31-07-2015 |
| | | | US | 2012150507 A1 | 14-06-2012 |
| | | | WO | 2010149444 A1 | 29-12-2010 |
| EP 1396770 | B1 | 04-07-2007 | AT | E366431 T1 | 15-07-2007 |
| | | | AU | 2003255362 A1 | 29-03-2004 |
| | | | BR | 0305782 A | 05-10-2004 |
| | | | EP | 1396770 A1 | 10-03-2004 |
| | | | ES | 2290222 T3 | 16-02-2008 |
| | | | KR | 20050059064 A | 17-06-2005 |
| | | | WO | 2004023226 A1 | 18-03-2004 |

EPO FORM P0459

For more details about this annex : see Official Journal of the European Patent Office, No. 12/82

**REFERENCES CITED IN THE DESCRIPTION**

**Patent documents cited in the description**

- IN 202421046159